# FASCICULE DE BREVET EUROPEEN

(11) **EP 3 081 441 B1**
(45) Date de publication et mention de la délivrance du brevet: **18.04.2018**
(21) Numéro de dépôt: 16163158.5
(22) Date de dépôt: 31.03.2016
(51) Int. Cl.: B60S 1/38

(54) **BALAI D'ESSUYAGE ET ENSEMBLE D'ESSUYAGE COMPRENANT UN TEL BALAI**
SCHEIBENWISCHER UND WISCHEREINHEIT, DIE EINEN SOLCHEN SCHEIBENWISCHER UMFASST
WIPER BLADE AND WIPER ASSEMBLY COMPRISING SUCH A BLADE

(30) Priorité: 17.04.2015 FR 1553473
(43) Date de publication de la demande: 19.10.2016
(73) Titulaire: Valeo Systèmes d'Essuyage, 78322 Le Mesnil Saint Denis (FR)
(72) Inventeur: GAUCHER, M.Vincent, 63720 ENNEZAT (FR); GARIBALDI, Vincent, 63500 ISSOIRE (FR)
(74) Mandataire: Callu Danseux, Violaine

(56) Documents cités:
- WO-A1-2012/065639
- DE-A1-102011 082 676
- FR-A- 1 217 680
- US-A1- 2008 209 662

## Description

La présente invention concerne un balai d'essuyage pour vitre de véhicule automobile, ainsi qu'un ensemble d'essuyage intégrant un tel balai d'essuyage. Le document US 2008/0209662 A1 divulgue un balai d'essuyage selon le préambule de la revendication 1. Il existe aujourd'hui une technologie de balai d'essuyage pour vitre de véhicule connue sous le nom de balai plat (ou Flat Blade en Anglais) et dont un exemple de réalisation est décrit dans la demande de brevet FR2923785 déposée par la demanderesse.

Cette technologie de balai plat consiste généralement en une structure construite autour d'une pièce longitudinale monobloc formant un support en matériau plastique semi-rigide et flexible comprenant, d'une part, une cavité dans laquelle est logé un élément de rigidification du balai, généralement en forme de bande métallique allongée élastique, appelée également vertèbre, et, d'autre part, une griffe portant la lame d'essuyage en élastomère. Dans la demande de brevet précédemment citée, la pièce monobloc est solidaire d'un connecteur central permettant la liaison avec le mécanisme d'entraînement du balai. Ce type de construction est classique d'un ensemble d'essuyage d'un pare-brise.

Or, en matière d'essuyage des vitres d'une automobile, même si l'accent est souvent mis sur l'essuyage du pare-brise, on peut prévoir l'essuyage de la vitre arrière d'un véhicule automobile. Ce type d'essuyage n'est pas obligatoire mais il est particulièrement intéressant en ce qu'il permet d'assurer au conducteur une vision dégagée du trafic à l'arrière du véhicule ou en cas de marche arrière.

Que l'on utilise un balai pour un pare-brise ou pour une vitre arrière, l'usure des lames d'essuyage impose de réaliser plusieurs fois leur remplacement pendant la durée de vie du véhicule, et les concepteurs visent à proposer des ensembles d'essuyage optimisés pour faciliter le montage et le démontage par l'utilisateur du véhicule.

Par ailleurs, ces concepteurs cherchent à proposer des ensembles d'essuyage, notamment de vitre arrière, dans lesquels le balai est correctement plaqué contre la vitre pour que la lame soit le plus possible en contact avec la vitre, et ce afin d'optimiser la fonction d'essuyage.

Dans ce contexte, l'invention propose un balai d'essuyage d'une vitre de véhicule automobile, comprenant une lame d'essuyage destinée à être plaquée contre la vitre à essuyer et au moins un élément de structure du balai pour supporter la lame sur toute sa longueur, ledit élément de structure comprenant au moins un élément de rigidification, ledit élément de rigidification étant prolongé au-delà d'une extrémité axiale de la lame d'essuyage par une portion de raccordement comprenant une paroi porteuse de moyens de fixation à un système d'entrainement en rotation du balai. Selon l'invention, ladite portion de raccordement est formée par l'élément de rigidification replié au moins deux fois sur lui-même de manière à présenter sensiblement une forme de « S » dans laquelle la paroi porteuse des moyens de fixation s'étend au moins partiellement à l'aplomb de la lame d'essuyage.

Ainsi, lorsqu'un tel balai est monté sur le mécanisme d'entraînement correspondant, une partie de la lame d'essuyage peut être glissée entre la vitre à essuyer et ce mécanisme d'entraînement de manière à essuyer une zone de la vitre qui est d'habitude non nettoyée.

Selon différentes caractéristiques de l'invention, prises seules ou en combinaison :
- l'élément de rigidification est une tige préformée de manière à présenter une première partie sensiblement plane, qui s'étend sur la longueur de la lame, et une deuxième partie qui prolonge une extrémité axiale proximale de la première partie et qui forme ladite portion de raccordement du balai audit mécanisme d'entraînement ;
- la deuxième partie de l'élément de rigidification comporte un bras formant ressort et une paroi de fixation qui s'étend sensiblement parallèlement à la première partie de l'élément de rigidification. Dans ce cas, ladite paroi de fixation, ledit bras formant ressort et ladite extrémité axiale proximale de la première partie de l'élément de rigidification sont agencés les uns par rapport aux autres de manière à présenter ladite forme de « S » ;
- le bras formant ressort comporte, dans la continuité de la première partie plane, une première portion de renvoi courbe qui se prolonge par une paroi intermédiaire recouvrant partiellement ladite première partie plane, ladite paroi intermédiaire présentant à son extrémité opposée une deuxième portion de renvoi courbe qui se prolonge par ladite paroi de fixation, la paroi intermédiaire étant disposée entre la première partie de l'élément de rigidification et la paroi de fixation ;

- la paroi intermédiaire présente une inclinaison par rapport aux plans dans lesquels sont inscrits respectivement la paroi de fixation et la première partie de l'élément de rigidification ;
- la deuxième partie de l'élément de rigidification est orientée de sorte que la paroi intermédiaire et la paroi de fixation soient agencées du côté de l'élément de rigidification qui est opposé à la lame d'essuyage ;
- les moyens de fixation consistent en une encoche réalisée dans la paroi de fixation ;
- à une extrémité distale du balai, la lame et l'élément de rigidification présentent des extrémités axiales situées sensiblement en vis-à-vis, et en ce qu'un embout d'assemblage fixe la lame et le ou les éléments de rigidification à ladite extrémité distale.

Selon des caractéristiques constitutives d'un premier mode de réalisation :
- l'élément de structure du balai consiste en l'élément de rigidification ainsi qu'un moyen de support comprenant au moins une cavité, dans laquelle est logée la première partie de l'élément de rigidification, et une griffe porteuse de la lame d'essuyage, la cavité et la griffe s'étendant longitudinalement sur toute la longueur du moyen de support, avec la griffe s'étendant à l'aplomb de la cavité ;
- le moyen de support est réalisé en matériau(x) plastique(s) semi-rigide(s), de préférence extrudé(s) ;
- la cavité présente une section transversale de forme rectangulaire, complémentaire de celle de l'élément de rigidification ;
- la griffe comporte deux pattes qui sont venues de matière avec une paroi du moyen de support et dont l'extrémité libre est prolongée perpendiculairement vers l'intérieur de la griffe.

Dans un mode de réalisation distinct, l'élément de structure du balai peut consister en l'élément de rigidification seul qui présente une fente axiale dans laquelle la lame est emmanchée, ladite fente axiale s'étendant sur la première partie plane depuis l'extrémité axiale distale de l'élément de rigidification jusqu'à la portion de raccordement.

L'invention concerne en outre un ensemble d'essuyage comprenant un balai tel que décrit précédemment et une tête d'entraînement montée sur un arbre d'entrainement motorisé. Selon l'invention, les moyens de fixation portés par la portion de raccordement prolongeant axialement le balai sont aptes à coopérer avec des moyens de fixation complémentaires portés par la tête d'entraînement.

Le fait que la fixation du balai à la tête d'entraînement soit réalisée par l'élément de rigidification et que celui-ci comporte un bras en forme de « S » intégrant une fonction ressort permet de proposer des ensembles d'essuyage, notamment de vitre arrière, dans lesquels simultanément le balai est correctement plaqué contre la vitre pour que la lame soit le plus possible en contact avec la vitre, et une partie du balai s'étend entre la tête d'entraînement et la vitre à essuyer, ceci permettant d'optimiser la fonction d'essuyage.

Selon une caractéristique de l'invention, le bras formant ressort dans le prolongement axial du balai présente une forme en « S » telle que le balai s'étend au moins en partie à l'aplomb de la tête d'entraînement, sous cette dernière. Le balai peut ainsi essuyer une zone de la vitre qui n'était pas accessible précédemment dans des conceptions où le balai est raccordé au mécanisme d'entraînement à l'une de ses extrémités axiales.

Selon différentes caractéristiques relatives à la tête d'entraînement, celle-ci peut comporter un corps axial de réception de l'arbre d'entrainement ainsi qu'un bras latéral prolongeant radialement le corps axial et présentant un logement de réception de l'extrémité longitudinale proximale de l'élément de rigidification. Un clip est prévu à l'intérieur du logement de réception pour coopérer avec l'encoche transversale de l'extrémité de l'élément de rigidification. Le corps axial peut comporter en outre une patte diamétralement opposée au bras latéral. Ainsi, on peut compenser, par la butée de la patte, les couples créés par l'effet ressort du bras.

Selon une caractéristique de l'invention, pas revendiquée, le clip réalise une fixation irréversible du balai dans la tête d'entraînement. En après-vente, on remplace le balai d'essuyage en démontant l'ensemble comprenant le balai et la tête d'entraînement.

D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une vue de face d'un ensemble d'essuyage selon l'invention ;
- la figure 2 est une vue de côté de l'ensemble d'essuyage illustré sur la figure 1 ;
- la figure 3 est une vue en coupe, dans le plan III-III illustré sur la figure 2, d'un détail de l'ensemble d'essuyage ;
- la figure 4 est une vue en perspective éclatée des différents composants de l'ensemble d'essuyage selon le premier mode de réalisation illustré sur la figure 1 ; et
- la figure 5 est une vue en perspective éclatée de différents composants d'un ensemble d'essuyage selon un deuxième mode de réalisation de l'invention.

Tel qu'illustré sur les figures, l'ensemble d'essuyage selon l'invention comporte un balai d'essuyage 2 et une tête d'entraînement 4.

Dans un tel ensemble d'essuyage, le balai est mis en mouvement en regard d'une vitre du véhicule par l'intermédiaire d'un mécanisme d'entraînement dans lequel la tête d'entraînement est entraînée en rotation par un arbre d'entraînement 6 monté en sortie, par exemple, d'un moteur électrique non représenté.

L'ensemble d'essuyage est avantageusement destiné à être positionné sur le véhicule de façon à ce que le balai d'essuyage, au repos, soit en position sensiblement horizontale, par exemple, le long d'un bord inférieur de la vitre. En fonctionnement, il pivote alors selon un mouvement de va et vient entre sa position de repos et une position angulairement décalée de ladite position de repos de façon à essuyer la zone souhaitée.

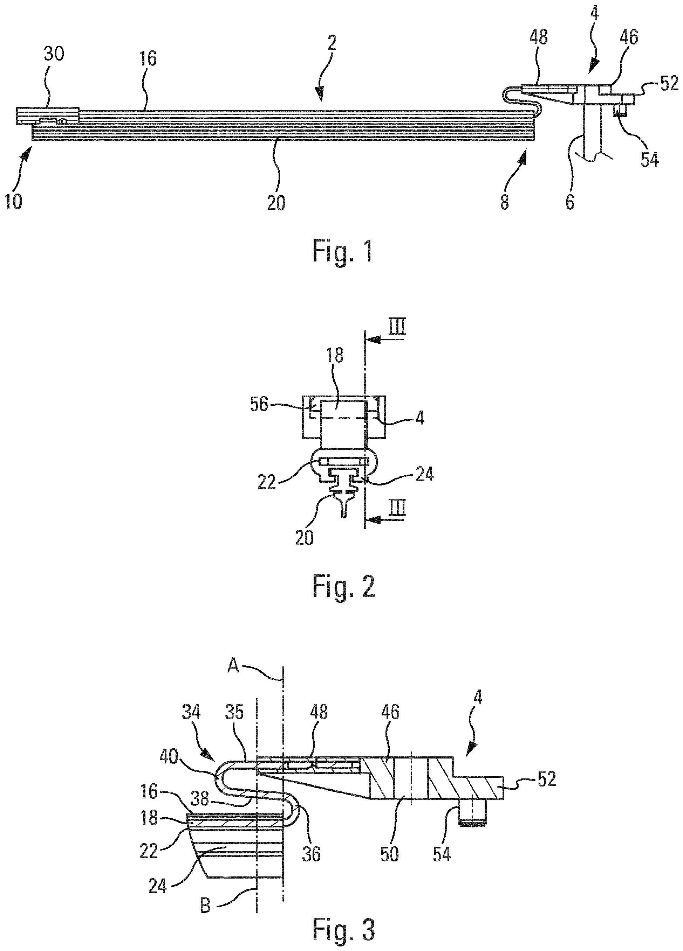

Le balai 2 présente une extrémité proximale 8 reliée à la tête d'entraînement 4 et une extrémité distale libre 10, tel que cela est visible sur la figure 1.

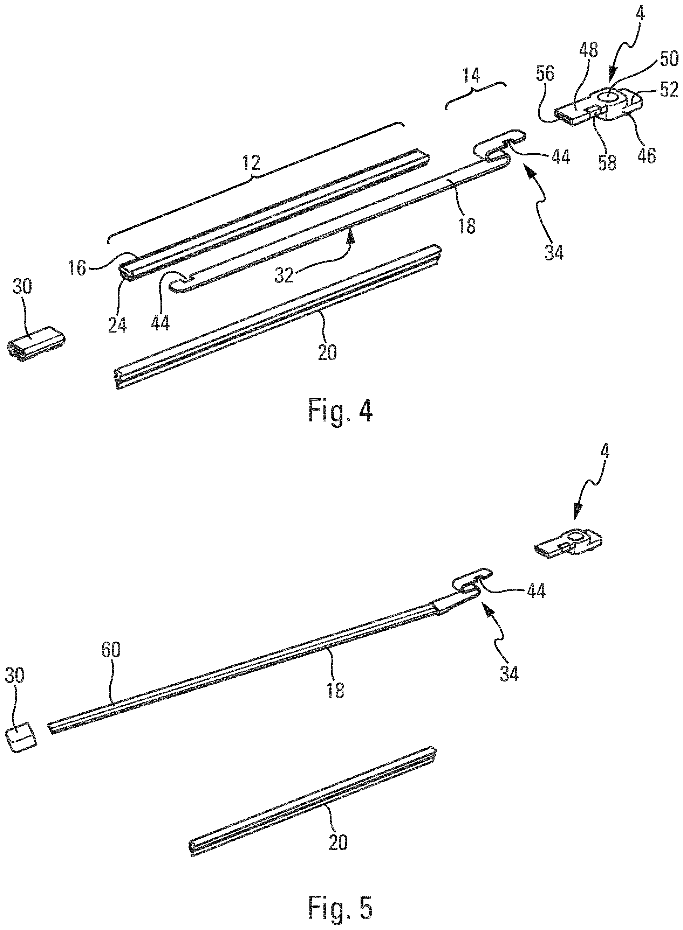

Le balai comporte une portion d'essuyage 12 et une portion de raccordement 14 à la tête d'entraînement 4, cette fois visibles sur la figure 4, ladite portion de raccordement étant disposée dans le prolongement d'une extrémité axiale de la portion d'essuyage.

On va maintenant décrire un premier mode de réalisation, illustré sur les figures 1 à 4, et dans lequel la portion d'essuyage 12 comporte un moyen de support longitudinal 16, un élément de rigidification 18 et une lame d'essuyage 20.

Le moyen de support et l'élément de rigidification forment des éléments de structure du balai, aptes à rigidifier l'ensemble et à assurer la tenue de la lame d'essuyage notamment.

Le moyen de support 16 comporte, conformément à la technologie balai plat, d'une part au moins une cavité 22 dans laquelle est logé l'élément de rigidification 18 et, d'autre part, une griffe 24 portant la lame d'essuyage 20.

La cavité et la griffe s'étendent longitudinalement sur toute la longueur du moyen de support, et la griffe 24 s'étend à l'aplomb A de la cavité 22, en saillie d'une des parois délimitant les contours de la cavité, que l'on nommera par la suite paroi intérieure par rapport à la position du balai lorsqu'il est appliqué contre la vitre à essuyer.

La cavité 22 présente une section transversale de forme complémentaire de celle de l'élément de rigidification 18 de manière à ce que celui-ci puisse être inséré dans la cavité, et ce sur toute la longueur du moyen de support 16.

La griffe 24 comporte deux pattes qui sont venues de matière avec la paroi intérieure du moyen de support de manière à s'étendre en saillie sensiblement perpendiculaire à cette paroi et dont l'extrémité libre est prolongée perpendiculairement vers l'intérieur de la griffe de manière à limiter la section de passage de la griffe et permettre l'emprisonnement de la lame d'essuyage à l'intérieur de la griffe.

Le moyen de support 16 est réalisé en matériau(x) plastique(s) semi-rigide(s), de préférence extrudé(s), tandis que l'élément de rigidification 18 amené à être logé dans la cavité du moyen de support est métallique et que la lame d'essuyage 20 amenée à être retenue par la griffe est en élastomère.

La lame d'essuyage 20 présente une forme longitudinale continue telle qu'en section transversale une partie de plus grande épaisseur sert de base à une aile allant en s'affinant vers son extrémité libre. La partie de base présente une forme adaptée à être logée et retenue dans la griffe et l'aile est apte à s'étendre en saillie hors de la griffe de sorte que la lame d'essuyage, lorsque le balai est monté sur le véhicule, est en appui au niveau de cette aile contre une face extérieure de la vitre du véhicule. La vitre mentionnée comme un exemple d'une vitre essuyée par le système d'essuyage selon l'invention est ici une vitre arrière, mais il va de soi que cette vitre peut être un pare-brise du véhicule et d'une manière générale tout vitrage d'un véhicule automobile dont la surface est apte à être essuyée par un système d'essuyage.

On comprend qu'une seule vertèbre est présente dans le mode de réalisation illustré, mais que deux vertèbres superposées l'une au-dessus de l'autre pourront être prévues dans une même cavité ou dans deux cavités disposées l'une sur l'autre. La ou les vertèbres forment des éléments de rigidification du balai et ils s'étendent le long de celui-ci pour supporter la lame sur toute sa longueur.

Alors qu'à l'extrémité distale 10 du balai, la lame et l'élément de rigidification présentent des extrémités axiales situées sensiblement en vis-à-vis au-delà de l'extrémité du moyen de support, et qu'un embout d'assemblage 30 permet de solidariser la lame et le ou les éléments de rigidification au niveau de ces extrémités axiales, on observe que selon l'invention, à l'extrémité proximale 8 du balai, l'élément de rigidification 18 se prolonge axialement au-delà de l'extrémité axiale correspondante de la lame 20, de manière à être solidarisée à la tête d'entraînement 4, comme cela va être détaillé à la suite.

L'élément de rigidification 18 est une tige préformée de manière à présenter une première partie 32, sensiblement plane et de section complémentaire à celle de la cavité, ici une section sensiblement rectangulaire, apte à assurer la rigidification du support et la tenue de la lame d'essuyage, et une deuxième partie qui prolonge l'extrémité axiale de la première partie de rigidification 32 et qui est agencée de manière à former la portion de raccordement 14 du balai à la tête d'entraînement.

La portion de raccordement comporte un bras 34 configuré pour intégrer un effet ressort, apte à appliquer le balai sur la vitre et une paroi de fixation 35 à la tête d'entraînement qui s'étend dans la continuité axiale du bras.

Le bras intégrant une fonction ressort comporte deux portions de renvoi courbes séparées par une paroi intermédiaire, de sorte que la portion de raccordement prend ici une forme de "S". Dans la continuité de la première partie plane 32, une première portion de renvoi 36 est réalisée par pliage sur lui-même de l'élément de rigidification selon une première ligne de pliage transversale comprise dans le plan défini par l'élément de rigidification. Cette première portion de renvoi présente dans le plan de coupe axial et vertical une forme de demi-cercle qui se prolonge par une paroi intermédiaire 38 qui est de la sorte orientée de manière à venir partiellement recouvrir la première partie plane de l'élément de rigidification. La paroi intermédiaire présente à son extrémité opposée une deuxième portion de renvoi 40 qui est réalisée également par pliage sur lui-même de l'élément de rigidification selon une deuxième ligne de pliage parallèle à la première ligne de pliage et qui se prolonge par la paroi de fixation 35 à la tête d'entraînement, agencée dans un plan sensiblement parallèle à celui défini par la première partie de l'élément de rigidification. La deuxième portion courbe présente elle aussi une forme de demi-cercle orienté dans le sens de l'éloignement de l'élément de rigidification, de manière à ce que la paroi intermédiaire soit disposée entre la première partie de l'élément de rigidification et la paroi de fixation. Les portions courbes sont orientées en outre de sorte que la paroi intermédiaire et la paroi de fixation soient agencées du côté de l'élément de rigidification qui est opposé à la lame d'essuyage. Ainsi, lorsque la lame et l'élément de rigidification sont en position dans le moyen de support, la deuxième partie s'étend au-dessus du reste du balai, la paroi de fixation s'étendant en partie à l'aplomb (A) de l'extrémité axiale proximale de la lame.

La dimension de la paroi intermédiaire et son inclinaison par rapport à la première partie de l'élément de rigidification, lorsque le balai n'est pas sollicité, sont dimensionnées pour faire travailler en flexion le bras entre la lame et la tête d'entraînement, de manière à ce que ledit bras puisse imprimer un effort au balai en direction de la vitre et assurer un essuyage efficace.

On comprend qu'en fonctionnement, si le balai vient à se dégager de la vitre, la lame n'étant alors plus en contact de celle-ci, le balai tend dans le même temps à se rapprocher de la tête d'entraînement, dans une direction perpendiculaire à la vitre, sensiblement parallèle à celle de l'arbre d'entraînement. La portion de raccordement est alors comprimée dans cette direction contre la tête d'entraînement, par aplatissement des portions de renvoi courbes.

L'élasticité du matériau utilisé pour réaliser l'élément de rigidification d'une part, et le pliage réalisé pour que les parois planes de cette portion de raccordement, à savoir la paroi de fixation et la paroi intermédiaire, s'étendent dans des plans transversaux parallèles à celui défini par la première partie de l'élément de rigidification d'autre part, permettent alors de créer un effet ressort optimisé qui en réaction tend à ramener l'élément de rigidification dans sa forme d'origine, et donc à ramener le balai en sa position initiale contre la vitre à essuyer.

A l'extrémité distale du balai, un embout 30 est adapté à coopérer avec les extrémités de l'élément de rigidification et de la lame d'essuyage, principalement pour éviter l'échappement de la lame d'essuyage. Dans le premier mode de réalisation, l'embout est encliqueté sur des moyens de fixation qui peuvent être portés par l'élément de rigidification, comme l'encoche illustré sur la figure 4, ou bien portés par le moyen de support correspondant.

A l'extrémité proximale opposée, on prévoit une encoche transversale 44 réalisée dans un des bords longitudinaux de l'élément de rigidification, pour permettre l'encliquetage de l'élément de rigidification dans des moyens correspondants. Selon l'invention, l'élément de rigidification est préformé de sorte que l'encoche, formant ici partie des moyens de fixation du balai sur la tête d'entraînement, s'étende à l'aplomb (A) de la lame d'essuyage.

Tel qu'illustré sur les figures 1 à 3, l'extrémité libre de la paroi de raccordement coopère avec la tête d'entraînement 4, qui comporte un corps axial 46 et un bras latéral 48 prolongeant radialement le corps axial.

Le corps axial présente un alésage 50, ici transversal, pour recevoir une extrémité de l'arbre d'entraînement 6 disposé en sortie du moteur d'entraînement du balai d'essuie-glace. Des moyens sont prévus pour la solidarisation de l'arbre dans l'alésage du corps axial, ces moyens pouvant être indifféremment un système à clavette, ou à cannelures, ou encore à titre d'exemple des moyens d'ajustement pour un montage à force des deux éléments.

Le corps comporte en outre une patte 52 qui prolonge radialement le corps axial. Cette patte comporte de préférence un pion de guidage 54 qui dépasse en saillie de la face intérieure de la patte pour coopérer avec un chemin de guidage formé dans un élément de structure du véhicule ici non représenté. Le fait que la patte soit diamétralement opposée au bras latéral lui permet de jouer un rôle de butée empêchant le basculement de la tête d'entraînement suite aux contraintes générées sur la tête par le bras intégrant une fonction ressort. On comprend en effet que lorsque le bras participe au plaquage de la lame contre la vitre, cette dernière génère un effort en retour sur le balai et sur l'élément de rigidification, de sorte que la portion de ressort peut créer un effort poussant la tête d'entraînement dans le sens de l'éloignement de la vitre essuyée. Le couple crée est alors compensé par le contact de la patte 52 contre l'élément de structure.

Le bras latéral 48 présente un logement de réception 56 de l'extrémité longitudinale proximale de l'élément de rigidification. Tel que cela est visible sur la figure 4, un clip 58 est prévu dans le logement de réception pour coopérer avec l'encoche transversale de l'extrémité de l'élément de rigidification. Ce clip dépasse en saillie à l'intérieur du logement dans sa position de repos de manière à être repoussé élastiquement vers une position dégagée permettant l'insertion de l'élément de rigidification et l'élasticité du clip ramène celui-ci en position initiale, en prise dans l'encoche, de sorte que l'élément de rigidification ne peut se désengager.

Dans le cas ainsi décrit, où le montage de l'élément de rigidification dans la tête d'entraînement est irréversible, l'utilisateur souhaitant remplacer le balai d'essuyage retire l'ensemble comprenant le balai et la tête d'entraînement en désengageant cette dernière de l'arbre d'entraînement, puis il replace une nouvelle tête sur l'arbre avant de venir solidariser un nouveau balai sur la tête. On vend alors en après-vente l'ensemble d'essuyage comprenant un balai, selon l'un ou l'autre des modes de réalisation, et une tête d'entraînement.

On comprendra que le clip prévu dans le logement de réception pour coopérer avec l'encoche de l'élément de rigidification pourrait être conçu pour autoriser un montage réversible de l'élément de rigidification dans la tête d'entraînement, et l'utilisateur pourrait laisser à demeure la tête d'entraînement sur l'arbre d'entrainement et ne remplacer à chaque fois que le balai d'essuyage.

On va maintenant décrire un deuxième mode de réalisation, illustré sur la figure 5, et qui diffère du premier mode de réalisation précédemment décrit en ce que l'élément de structure du balai consiste en l'élément de rigidification seul.

L'élément de rigidification présente une fente axiale 60 dans laquelle la lame est emmanchée, ladite fente axiale s'étendant sur la première partie plane depuis l'extrémité axiale distale de l'élément de rigidification jusqu'à la portion de raccordement.

Comme précédemment, la lame comporte une base de plus grande épaisseur et une aile s'affinant vers son extrémité libre, apte à venir en appui contre la vitre. La lame est emmanchée de manière à ce que l'élément de rigidification sépare la base des ailes et maintienne la lame en prise au niveau de la base.

L'embout disposé à l'extrémité axiale distale du balai permet là encore de maintenir en position axiale la lame par rapport au balai et à l'élément de structure formé par l'élément de rigidification, et cet embout pourra à titre d'exemple être emmanché à force sur l'élément de rigidification.

Dans chacun des modes de réalisation de l'invention, le balai est fixé sur la tête d'entraînement par l'intermédiaire de l'extrémité longitudinale proximale de l'élément de rigidification, et l'on constate que la portion de raccordement de l'élément de rigidification préformé, et plus précisément la forme de « S » permet qu'une partie du balai d'essuyage s'étende sous le bras latéral de la tête d'entraînement. Cette partie du balai, et la partie de la lame correspondante a alors accès à une zone de la vitre à essuyer qui n'est pas accessible en temps normal, car sous la tête d'entraînement du balai d'essuyage.

La description qui précède explique clairement comment l'invention permet d'atteindre les objectifs qu'elle s'est fixés et notamment de proposer un ensemble d'essuyage qui permette d'obtenir une plus grande surface d'essuyage que ce qu'il est traditionnellement permis, le tout avec un balai de conception simple et au nombre de pièces réduit et qui est en outre correctement appliqué sur la vitre à essuyer. Tous ces avantages sont obtenus par la conception courbée de l'extrémité proximale du balai, et sa coopération avec une tête d'entraînement spécifique.

La forme et l'orientation de la courbe de la portion de raccordement permet d'avoir une extrémité de la lame d'essuyage qui s'étend sous la tête d'entraînement et donc de couvrir une zone de la vitre qui est classiquement non nettoyée sur les vitres à l'arrière des véhicules.

Par ailleurs, cette forme permet d'assurer un effet élastique tendant à ramener le balai dans sa position d'origine, plaqué contre la vitre à essuyer, avec une pression appliquée sensiblement verticalement, de haut en bas, qui assure un bon plaquage du balai.

Bien entendu, diverses modifications peuvent être apportées par l'homme du métier aux structures de l'ensemble d'essuyage, qui viennent d'être décrites à titre d'exemples non limitatifs, dès lors que l'on reprend le principe de la conception décrite ci-dessus avec une pièce de forme simple qui intègre la fonction de ressort de plaquage du bras de connexion à la tête d'entraînement venu de matière avec l'élément de rigidification du balai. La forme ici décrite en S pourra ainsi sensiblement varier dès lors qu'elle assure les deux fonctions que sont le balayage sous la tête d'entraînement et le plaquage correct du balai contre la vitre à essuyer.

En variante non représentée, on pourra prévoir qu'un accessoire est fixé sur le support longitudinal, et cet accessoire, pourra être avantageusement un déflecteur aérodynamique comprenant un dispositif de distribution et de projection de fluide constitué de deux canaux longitudinaux percés de trous afin de permettre la projection d'un liquide de lavage par exemple sur une vitre du véhicule. On prévoit dans ce cas la présence sur le support d'une nervure longitudinale destinée à être insérée dans un logement de forme complémentaire. Cette nervure permet, au besoin, de rigidifier le déflecteur aérodynamique, réalisé par extrusion indépendamment du support, après assemblage sur le support.

## Revendications

1. Balai d'essuyage d'une vitre de véhicule automobile, comprenant une lame d'essuyage (20) destinée à être plaquée contre la vitre à essuyer et au moins un élément de structure du balai pour supporter la lame sur toute sa longueur, ledit élément de structure comprenant au moins un élément de rigidification (18), ledit élément de rigidification étant prolongé au-delà d'une extrémité axiale de la lame d'essuyage par une portion de raccordement (14) comprenant une paroi (35) porteuse de moyens de fixation (44) à un système d'entrainement en rotation (4, 6) du balai, **caractérisé en ce que** ladite portion de raccordement est formée par l'élément de rigidification replié au moins deux fois sur lui-même de manière à présenter sensiblement une forme de « S » dans laquelle ladite paroi porteuse (35) des moyens de fixation s'étend au moins partiellement à l'aplomb (A) de la lame d'essuyage.

2. Balai d'essuyage selon la revendication 1, **caractérisé en ce que** ledit élément de rigidification (18) est une tige préformée de manière à présenter une première partie (32) sensiblement plane, qui s'étend sur la longueur de la lame, et une deuxième partie qui prolonge une extrémité axiale proximale de la première partie et qui forme ladite portion de raccordement (14) du balai audit mécanisme d'entraînement.

3. Balai d'essuyage selon la revendication 2, **caractérisé en ce que** la deuxième partie de l'élément de rigidification (18) comporte un bras formant ressort (34) et une paroi de fixation (35) qui s'étend sensiblement parallèlement à la première partie de l'élément de rigidification, ladite paroi de fixation, ledit bras formant ressort et ladite extrémité axiale proximale de la première partie de l'élément de rigidification étant agencés les uns par rapport aux autres de manière à présenter ladite forme de « S ».

4. Balai selon la revendication 3, **caractérisé en ce que** le bras formant ressort (34) comporte, dans la continuité de la première partie plane (32), une première portion de renvoi courbe (36) qui se prolonge par une paroi intermédiaire (38) recouvrant partiellement la première partie, la paroi intermédiaire présentant à son extrémité opposée une deuxième portion de renvoi courbe (40) qui se prolonge par la paroi de fixation (35), la paroi intermédiaire étant disposée entre la première partie de l'élément de rigidification et la paroi de fixation.

5. Balai d'essuyage selon la revendication 4, **caractérisé en ce que** la paroi intermédiaire (38) présente une inclinaison par rapport aux plans dans lesquels sont inscrits respectivement la paroi de fixation (35) et la première partie de l'élément de rigidification (32).

6. Balai d'essuyage selon l'une des revendications 4 ou 5, **caractérisé en ce que** la deuxième partie de l'élément de rigidification est orientée de sorte que la paroi intermédiaire (38) et la paroi de fixation (35) soient agencées du côté de l'élément de rigidification (18) qui est opposé à la lame d'essuyage (20).

7. Balai d'essuyage selon l'une des revendications 2 à 6, **caractérisé en ce que** ledit élément de structure du balai consiste en l'élément de rigidification (18) ainsi qu'un moyen de support (16) comprenant au moins une cavité (22), dans laquelle est logée la première partie (32) de l'élément de rigidification, et une griffe (24) porteuse de la lame d'essuyage (20), la cavité et la griffe s'étendant longitudinalement sur toute la longueur du moyen de support, avec la griffe s'étendant à l'aplomb (A) de la cavité (22).

8. Balai d'essuyage selon la revendication 7, **caractérisé en ce que** le moyen de support (16) est réalisé en matériau(x) plastique(s) semi-rigide(s), de préférence extrudé(s).

9. Balai d'essuyage selon la revendication 7 ou 8, **caractérisé en ce que** la cavité (22) présente une section transversale de forme rectangulaire, complémentaire de celle de l'élément de rigidification (18).

10. Balai d'essuyage selon l'une des revendications 7 à 9, **caractérisé en ce que** la griffe (24) comporte deux pattes qui sont venues de matière avec une paroi du moyen de support (16) et dont l'extrémité libre est prolongée perpendiculairement vers l'intérieur de la griffe.

11. Balai d'essuyage selon l'une des revendications 2 à 6, **caractérisé en ce que** ledit élément de structure du balai consiste en l'élément de rigidification (18) seul qui présente une fente axiale (60) dans laquelle la lame (20) est emmanchée, ladite fente axiale s'étendant sur la première partie plane (32) depuis l'extrémité axiale distale de l'élément de rigidification jusqu'à la portion de raccordement (14).

12. Balai d'essuyage selon l'une des revendications précédentes, **caractérisé en ce que** les moyens de fixation consistent en une encoche (44) réalisée dans la paroi de fixation (35).

13. Balai d'essuyage selon l'une des revendications précédentes, **caractérisé en ce qu'**à une extrémité distale (10) du balai, la lame (20) et l'élément de rigidification (18) présentent des extrémités axiales situées sensiblement en vis-à-vis, et **en ce qu'**un embout d'assemblage (30) fixe la lame et le ou les éléments de rigidification à ladite extrémité distale.

14. Ensemble d'essuyage comprenant une tête d'entraînement (4) montée sur un arbre d'entrainement motorisé (6), et un balai d'essuyage (2) selon l'une des revendications 1 à 13, dans lequel lesdits moyens de fixation portés par la portion de raccordement (14) prolongeant axialement le balai sont aptes à coopérer avec des moyens de fixation complémentaires portés par la tête d'entraînement.

15. Ensemble d'essuyage selon la revendication 14, **caractérisé en ce que** la portion de raccordement présente une forme de «S» telle que l'extrémité proximale de la lame d'essuyage (20) et l'extrémité correspondante de la première partie plane (32) s'étendent sous la tête d'entraînement (4), à l'aplomb (B) de celle-ci.

## Patentansprüche

1. Scheibenwischer für ein Kraftfahrzeug, umfassend ein Wischerblatt (20), das dazu bestimmt ist, gegen die zu wischende Scheibe gedrückt zu werden, und mindestens ein Strukturelement des Wischers, um das Blatt entlang seiner gesamten Länge zu tragen, wobei das Strukturelement mindestens ein Versteifungselement (18) umfasst, wobei das Versteifungselement über ein axiales Ende des Wischerblatts hinaus durch einen Verbindungsabschnitt (14) verlängert ist, umfassend eine Wand (35), die Befestigungsmittel (44) mit einem Drehantriebssystem (4, 6) des Wischers trägt, **dadurch gekennzeichnet, dass** der Verbindungsabschnitt durch das Versteifungselement gebildet wird, das mindestens zwei Mal in sich selbst gefaltet ist, um im Wesentlichen die Form eines "S" aufzuweisen, wobei sich die Wand (35), welche die Befestigungsmittel trägt, mindestens teilweise senkrecht unterhalb (A) des Wischerblatts erstreckt.

2. Wischer nach Anspruch 1, **dadurch gekennzeichnet, dass** das Versteifungselement (18) ein Schaft ist, der vorgeformt ist, um einen ersten im Wesentlichen ebenen Teil (32) aufzuweisen, der sich über die Länge des Blatts erstreckt, und einen zweiten Teil, der ein proximales axiales Ende des ersten Teils verlängert und der den Verbindungsabschnitt (14) des Wischers mit dem Antriebsmechanismus bildet.

3. Wischer nach Anspruch 2, **dadurch gekennzeichnet, dass** der zweite Teil des Versteifungselements (18) einen Arm, der eine Feder (34) bildet, und eine Befestigungswand (35) umfasst, die sich im Wesentlichen parallel zum ersten Teil des Versteifungselements erstreckt, wobei die Befestigungswand, der die Feder bildende Arm und das proximale axiale Ende des ersten Teils des Versteifungselements in Bezug aufeinander derart angeordnet sind, dass sie die Form des "S" bilden.

4. Wischer nach Anspruch 3, **dadurch gekennzeichnet, dass** der die Feder (34) bildende Arm, in der Kontinuität des ebenen ersten Teils (32), einen ersten gekrümmten Rückführungsabschnitt (36) umfasst, der sich durch eine Zwischenwand (38) verlängert, die teilweise den ersten Teil abdeckt, wobei die Zwischenwand an ihrem gegenüberliegenden Ende einen zweiten gekrümmten Rückführungsteil (40) aufweist, der sich durch die Befestigungswand (35) verlängert, wobei die Zwischenwand zwischen dem ersten Teil des Versteifungselements und der Befestigungswand angeordnet ist.

5. Wischer nach Anspruch 4, **dadurch gekennzeichnet, dass** die Zwischenwand (38) eine Neigung in Bezug auf zwei Ebenen aufweist, in denen jeweils die Befestigungswand (35) und der erste Teil des Versteifungselements (32) liegen.

6. Wischer nach einem der Ansprüche 4 oder 5, **dadurch gekennzeichnet, dass** der zweite Teil des Versteifungselements derart ausgerichtet ist, dass die Zwischenwand (38) und die Befestigungswand (35) neben dem Versteifungselement (18) angeordnet sind, das dem Wischerblatt (20) gegenüberliegt.

7. Wischer nach einem der Ansprüche 2 bis 6, **dadurch gekennzeichnet, dass** das Strukturelement des Wischers aus dem Versteifungselement (18) sowie einem Stützmittel (16) besteht, umfassend mindestens einen Hohlraum (22), in dem der erste Teil (32) des Versteifungselements gelagert ist, und einen Greifer (24), der das Wischerblatt (20) trägt, wobei sich der Hohlraum und der Greifer in Längsrichtung über die gesamte Länge des Stützmittels erstrecken, wobei sich der Greifer senkrecht unterhalb (A) des Hohlraums (22) erstreckt.

8. Wischer nach Anspruch 7, **dadurch gekennzeichnet, dass** das Stützmittel (16) aus (einem) halbstarren, vorzugsweise extrudierten Kunststoffmaterial(ien) hergestellt ist.

9. Wischer nach Anspruch 7 oder 8, **dadurch gekennzeichnet, dass** der Hohlraum (22) einen Querschnitt mit rechteckiger Form aufweist, komplementär zu jenem des Versteifungselements (18) .

10. Wischer nach einem der Ansprüche 7 bis 9, **dadurch gekennzeichnet, dass** der Greifer (24) zwei Lappen umfasst, die einstückig mit einer Wand des Stützmittels (16) ausgebildet sind und deren freies Ende rechtwinklig zum Inneren des Greifers verlängert ist.

11. Wischer nach einem der Ansprüche 2 bis 6, **dadurch gekennzeichnet, dass** das Strukturelement des Wischers nur aus dem Versteifungselement (18) besteht, das einen axialen Schlitz (60) aufweist, in dem das Blatt (20) eingepresst ist, wobei sich der axiale Schlitz über den ersten ebenen Teil (32) von dem distalen axialen Ende des Versteifungselements bis zum Verbindungsabschnitt (14) erstreckt.

12. Wischer nach einem der vorhergehenden Ansprüche, **dadurch gekennzeichnet, dass** die Befestigungsmittel aus einer Kerbe (44) bestehen, die in der Befestigungswand (35) vorgesehen ist.

13. Wischer nach einem der vorhergehenden Ansprüche, **dadurch gekennzeichnet, dass**, an einem distalen Ende (10) des Wischers, das Blatt (20) und das Versteifungselement (18) axiale Enden aufweisen, die im Wesentlichen gegenüber angeordnet sind, und dadurch, dass ein Montagestück (30) das Blatt und das oder die Versteifungselemente am distalen Ende befestigt.

14. Wischereinheit, umfassend einen Antriebskopf (4), der an einer Motorantriebswelle (6) montiert ist, und einen Wischer (2) nach einem der Ansprüche 1 bis 13, wobei die Befestigungsmittel, die vom Verbindungsabschnitt (14) getragen werden und den Wischer axial verlängern, geeignet sind, mit den komplementären Befestigungsmitteln zusammenzuwirken, die vom Antriebskopf getragen werden.

15. Wischereinheit nach Anspruch 14, **dadurch gekennzeichnet, dass** der Verbindungsabschnitt die Form eines "S" aufweist, so dass sich das proximale Ende des Wischerblatts (20) und das entsprechende Ende des ersten ebenen Teils (32) unter dem Antriebskopf (4) senkrecht unterhalb (B) desselben erstrecken.

## Claims

1. Wiper blade for a window of a motor vehicle, comprising a squeegee blade (20) designed to be pressed against the window that is to be wiped, and at least one structural element of the wiper blade for supporting the squeegee blade over its entire length, said structural element comprising at least one stiffener element (18), said stiffener element having a connection portion (14) that extends it beyond an axial end of the squeegee blade and comprises a wall (35) bearing means (44) for attachment to a drive system for (4, 6) for rotating the wiper blade, **characterized in that** said connection portion is formed by the stiffener element folded back on itself at least twice so as to have essentially an "S" shape, in which said wall (35) bearing the attachment means extends at least partially vertically in line (A) with the squeegee blade.

2. Wiper blade according to Claim 1, **characterized in that** said stiffener element (18) is a stem preformed so as to have an essentially planar first part (32) that extends over the length of the squeegee blade, and a second part which extends a proximal axial end of the first part and which forms said portion (14) connecting the wiper blade to said drive mechanism.

3. Wiper blade according to Claim 2, **characterized in that** the second part of the stiffener element (18) comprises an arm forming a spring (34) and an attachment wall (35) that extends essentially parallel to the first part of the stiffener element, said attachment wall, said arm forming a spring and said proximal axial end of the first part of the stiffener element being arranged with respect to one another so as to have said "S" shape.

4. Wiper blade according to Claim 3, **characterized in that** the arm forming a spring (34) comprises, in the continuation of the planar first part (32), a first curved return portion (36) that is extended by an intermediate wall (38) partially covering the first part, the intermediate wall having, at its opposite end, a second curved return portion (40) that is extended by the attachment wall (35), the intermediate wall being arranged between the first part of the stiffener element and the attachment wall.

5. Wiper blade according to Claim 4, **characterized in that** the intermediate wall (38) is inclined with respect to the planes respectively containing the attachment wall (35) and the first part of the stiffener element (32).

6. Wiper blade according to either of Claims 4 and 5, **characterized in that** the second part of the stiffener element is oriented such that the intermediate wall (38) and the attachment wall (35) are arranged on that side of the stiffener element (18) that is oriented away from the squeegee blade (20) .

7. Wiper blade according to one of Claims 2 to 6, **characterized in that** said structural element of the wiper blade consists of the stiffener element (18) and a support means (16) comprising at least one cavity (22) accommodating the first part (32) of the stiffener element, and a claw (24) bearing the squeegee blade (20), the cavity and the claw extending longitudinally over the entire length of the support means, with the claw extending vertically in line (A) with the cavity (22).

8. Wiper blade according to Claim 7, **characterized in that** the support means (16) is made of semi-rigid plastic material(s), preferably extruded.

9. Wiper blade according to Claim 7 or 8, **characterized in that** the cavity (22) has a rectangular cross section matching that of the stiffener element (18).

10. Wiper blade according to one of Claims 7 to 9, **characterized in that** the claw (24) comprises two tabs which are integral with a wall of the support means (16) and of which the free end extends in perpendicular fashion towards the interior of the claw.

11. Wiper blade according to one of Claims 2 to 6, **characterized in that** said structural element of the wiper blade consists of the stiffener element (18) alone which has an axial slot (60) into which the squeegee blade (20) is fitted, said axial slot extending over the planar first part (32) from the distal axial end of the stiffener element to the connection portion (14).

12. Wiper blade according to one of the preceding claims, **characterized in that** the attachment means consist of a notch (44) created in the attachment wall (35).

13. Wiper blade according to one of the preceding claims, **characterized in that**, at a distal end (10) of the wiper blade, the squeegee blade (20) and the stiffener element (18) have axial ends located essentially facing one another, and **in that** an end cap (30) secures the squeegee blade and the stiffener element(s) at said distal end.

14. Wiper assembly comprising a drive head (4) mounted on a motorized drive shaft (6), and a wiper blade (2) according to one of Claims 1 to 13, in which said attachment means borne by the connection portion (14) axially extending the wiper blade are able to engage with complementary attachment means borne by the drive head.

15. Wiper assembly according to Claim 14, **characterized in that** the connection portion has an "S" shape such that the proximal end of the squeegee blade (20) and the corresponding end of the planar first part (32) extend below and vertically in line (B) with the drive head (4).
